Europäisches Patentamt

European Patent Office

Office européen des brevets

(11) Publication number: **0 498 458 A2**

## EUROPEAN PATENT APPLICATION

(21) Application number: **92102088.9**

(22) Date of filing: **07.02.92**

(51) Int. Cl.5: **C07F 7/18**

(30) Priority: **08.02.91 JP 39101/91**

(43) Date of publication of application:
**12.08.92 Bulletin 92/33**

(84) Designated Contracting States:
**DE FR GB**

(71) Applicant: **SHIN-ETSU CHEMICAL CO., LTD.**
**6-1, Ohtemachi 2-chome**
**Chiyoda-ku Tokyo(JP)**

(72) Inventor: **Yanagisawa, Hideyoshi**
**21-1, Kokuga, Matsuida-machi**
**Usui-gun, Gunma-ken(JP)**
Inventor: **Yamaya, Masaaki**
**787-2, Yanase**
**Annaka-shi, Gunma-ken(JP)**

(74) Representative: **Jaeger, Klaus, Dr. et al**
**Patentanwälte JAEGER, LORENZ & KÖSTER**
**Pippinplatz 4a**
**W-8035 München-Gauting(DE)**

(54) **Novel aminoalkyl alkoxy silane compound.**

(57) Disclosed is an alkoxy silane compound having an $\omega$-amino-substituted long-chain alkyl group having 6 to 14 carbon atoms such as 6-aminohexyl methyl diethoxy silane, 10-aminodecyl trimethoxy silane and 14-aminotetradecyl dimethyl methoxy silane. By virtue of the high mobility of the amino group at the end of the long-chain linking group with flexibility, the silane compound is useful as a surface-treatment agent of inorganic materials to be compounded in a composite material to impart increased water resistance to the composite.

## BACKGROUND OF THE INVENTION

The present invention relates to a novel organosilicon compound or, more particularly, to a novel aminoalkyl alkoxy silane compound not known in the prior art nor described in any literatures, which is useful as a priming agent in adhesive bonding of an organic resin and an inorganic material and as an additive to various kinds of resin-based compositions to impart flexibility, reinforcement, water resistance and so on.

An organosilane compound having an aminoalkyl group and at least one alkoxy group bonded to the silicon atom is of course not novel as a class and widely used as an additive to various kinds of resin-based compositions to impart flexibility, reinforcement and water resistance, surface-modifying agent of inorganic materials, reaction initiator in certain polymerization reactions, starting material in the synthesis of various organosilicon compounds and so on.

Some of the examples of such an aminoalkyl alkoxy silane compounds known in the prior art include 3-aminopropyl trimethoxy silane, N-(2-aminoethyl)-3-aminopropyl trimethoxy silane, 3-aminopropyl triethoxy silane, 3-aminopropyl methyl dimethoxy silane, 3-aminopropyl methyl diethoxy silane, 3-aminopropyl dimethyl methoxy silane, 3-aminopropyl dimethyl ethoxy silane, N-(2-aminoethyl)-3-aminopropyl methyl dimethoxy silane, N-(2-aminoethyl)-3-aminopropyl methyl diethoxy silane, (2-aminoethylaminomethyl)-phenethyl trimethoxy silane and the like.

These known aminoalkyl alkoxy silane compounds of course can be used in the above mentioned applications and are indeed effective at least to some extent. It is sometimes the case, however, that no quite satisfactory results could be obtained by the use of these known silane compounds in the above mentioned applications. The inventors have continued extensive investigations to solve this problem and to develop an organosilane compound having more versatile effectiveness and obtained an idea that the reason for the insufficient effectiveness of these known silane compounds might be the structural disposition of the amino group and the silicon atom to which the amino group is, though indirectly, bonded.

In most of the above named aminoalkyl alkoxy silanes, namely, the amino group is bonded to the silicon atom through a propylene group $-C_3H_6-$ having only three carbon atoms. In the last named compound, the amino group and the silicon atom are bonded through an intervening phenylene group. At any rate, the amino group is bonded to the silicon atom through a linking unit of relatively low flexibility or mobility. The relatively high rigidity of the linking unit between the amino group and the silicon atom would presumably explain the relatively low efficiency of the known aminoalkyl alkoxy silane compounds in some of the applications. Directing their attention to this point, the inventors have conducted extensive synthetic works for organosilane compounds and arrived at a success of synthesizing a class of novel aminoalkyl alkoxy silane compounds free from the disadvantages in the known aminoalkyl alkoxy silane compounds.

## SUMMARY OF THE INVENTION

Thus, the novel organosilicon compound of the invention is an aminoalkyl alkoxy silane compound of which the aminoalkyl group has 6 to 14 carbon atoms. The compound is represented by the general formula

$$(R^1O)_m(CH_3)_{3-m}Si-R^2-NH_2, \qquad (I)$$

in which $R^1$ is a monovalent aliphatic hydrocarbon group having 1 or 2 carbon atoms, $R^2$ is a divalent aliphatic hydrocarbon group free from unsaturation having 6 to 14 carbon atoms and the subscript m is a positive integer of 1, 2 or 3.

In particular, the aminoalkyl group $-R^2-NH_2$ is an $\omega$-amino-n-alkyl group or 1-methyl-$\omega$-amino-n-alkyl group having 6 to 14 carbon atoms so that the silane compound is represented by the general formula

$$NH_2-(-CH_2-)_n-Si(OR^1)_m(CH_3)_{3-m}, \qquad (Ia)$$

or

$$NH_2-(-CH_2-)_{n-2}-CH(CH_3)-Si(OR^1)_m(CH_3)_{3-m}, \qquad (Ib)$$

in which each symbol has the same meaning as defined above.

## BRIEF DESCRIPTION OF THE DRAWING

Fifures 1 and 2 each show an infrared absorption spectrum and a $^1$H-NMR spectrum, respectively, of the 10-aminodecyl trimethoxy silane prepared in Example 1.

DETAILED DESCRIPTION OF THE PREFERRED EMBODIMENTS

As is described above, the aminoalkyl alkoxy silane compound of the invention is a silane compound represented by the general formula (I) given above. The aminoalkyl group given by the formula $-R^2-NH_2$ typically includes 9 kinds of $\omega$-amino-n-alkyl groups for the general formula (Ia) and 9 kinds of 1-methyl-$\omega$-amino-n-alkyl groups for the general formula (Ib) depending on the number of the subscript n which can be an integer of 6 to 14. Though not particularly limitative, the group denoted by $R^1$ in the general formulas is preferably a methyl or an ethyl group in view of the relatively low costs for the synthesis and the effectiveness of the compound in most applications.

Examples of the inventive aminoalkyl alkoxy silane compounds represented by the general formula (Ia) accordingly include:

6-aminohexyl trimethoxy silane;
7-aminoheptyl trimethoxy silane;
8-aminooctyl trimethoxy silane;
9-aminononyl trimethoxy silane;
10-aminodecyl trimethoxy silane;
11-aminoundecyl trimethoxy silane;
12-aminododecyl trimethoxy silane;
13-aminotridecyl trimethoxy silane;
14-aminotetradecyl trimethoxy silane;
6-aminohexyl methyl dimethoxy silane;
8-aminooctyl methyl dimethoxy silane;
10-aminodecyl methyl dimethoxy silane;
12-aminododecyl methyl dimethoxy silane;
14-aminotetradecyl methyl dimethoxy silane;
6-aminohexyl dimethyl methoxy silane;
8-aminooctyl dimethyl methoxy silane;
10-aminodecyl dimethyl methoxy silane;
12-aminododecyl dimethyl methoxy silane;
14-aminotetradecyl dimethyl methoxy silane;
6-aminohexyl triethoxy silane;
8-aminooctyl trimethoxy silane;
10-aminodecyl triethoxy silane;
12-aminododecyl triethoxy silane;
14-aminotetradecyl triethoxy silane;
6-aminohexyl methyl diethoxy silane;
8-aminooctyl methyl diethoxy silane;
10-aminodecyl methyl diethoxy silane;
12-aminododecyl methyl diethoxy silane;
14-aminotetradecyl methyl diethoxy silane;
6-aminohexyl dimethyl ethoxy silane;
8-aminooctyl dimethyl ethoxy silane;
10-aminodecyl dimethyl ethoxy silane;
12-aminododecyl dimethyl ethoxy silane;
14-aminotetradecyl dimethyl ethoxy silane;
and the like. Among these compounds, those of the general formula (Ia) in which the value of the subscript n is 6, 10 or 14 are important in respect of the easiness in the synthetic preparation.

Examples of the inventive aminoalkyl alkoxy silane compounds represented by the general formula (Ib) accordingly include:

1-methyl-5-aminopentyl trimethoxy silane;
1-methyl-6-aminohexyl trimethoxy silane;
1-methyl-7-aminoheptyl trimethoxy silane;
1-methyl-8-aminooctyl trimethoxy silane;
1-methyl-9-aminononyl trimethoxy silane;
1-methyl-10-aminodecyl trimethoxy silane;

1-methyl-11-aminoundecyl trimethoxy silane;
1-methyl-12-aminododecyl trimethoxy silane;
1-methyl-13-aminotridecyl trimethoxy silane;
1-methyl-5-aminopentyl methyl dimethoxy silane;
1-methyl-7-aminohexyl methyl dimethoxy silane;
1-methyl-9-aminononyl methyl dimethoxy silane;
1-methyl-11-aminoundecyl methyl dimethoxy silane;
1-methyl-13-aminotridecyl methyl dimethoxy silane;
1-methyl-5-aminopentyl dimethyl methoxy silane;
1-methyl-7-aminoheptyl dimethyl methoxy silane;
1-methyl-9-aminononyl dimethyl methoxy silane;
1-methyl-11-aminoundecyl dimethyl methoxy silane;
1-methyl-13-aminotridecyl dimethyl methoxy silane;
1-methyl-5-aminopentyl triethoxy silane;
1-methyl-7-aminoheptyl trimethoxy silane;
1-methyl-9-aminononyl triethoxy silane;
1-methyl-11-aminoundecyl triethoxy silane;
1-methyl-13-aminotridecyl triethoxy silane;
1-methyl-5-aminopentyl methyl diethoxy silane;
1-methyl-7-aminoheptyl methyl diethoxy silane;
1-methyl-9-aminononyl methyl diethoxy silane;
1-methyl-11-aminoundecyl methyl diethoxy silane;
1-methyl-13-aminotridecyl methyl diethoxy silane;
1-methyl-5-aminopentyl dimethyl ethoxy silane;
1-methyl-7-aminoheptyl dimethyl ethoxy silane;
1-methyl-9-aminononyl dimethyl ethoxy silane;
1-methyl-11-aminoundecyl dimethyl ethoxy silane;
1-methyl-13-aminotridecyl dimethyl ethoxy silane;
and the like.

These aminoalkyl alkoxy silane compounds can be prepared by several different synthetic routes. In the first place, an $\omega$-cyanoalkene-1 compound of the general formula

$$NC\text{-}R^3\text{-}CH = CH_2, \quad (II)$$

in which $R^3$ is a divalent aliphatic hydrocarbon group free from unsaturation having 3 to 11 carbon atoms, and a hydrosilane compound of the general formula

$$H\text{-}Si(CH_3)_{3\text{-}m}X_m, \quad (III)$$

in which X is a halogen atom or an alkoxy group of the formula $R^1O\text{-}$ and m has the same meaning as defined above, are subjected to the hydrosilation reaction at a temperature of 20 to 200 °C for 30 minutes to 20 hours in the presence of a catalyst which can be a compound of a transition metal element of the VIIIth Group in the Periodic Table such as platinum, rhodium, nickel, ruthenium, cobalt and the like or an amine compound to produce a reaction product of the general formula

$$NC\text{-}R^3\text{-}CH_2\text{-}CH_2\text{-}Si(CH_3)_{3\text{-}m}X_m, \quad (IV)$$

in which each symbol has the same meaning as defined above. When X is a halogen atom, the compound is reacted with an alcohol of the general formula $R^1OH$, in which $R^1$ has the same meaning as defined above, optionally, in the presence of a hydrogen halide acceptor such as an amine compound, e.g., triethyl amine, sodium methoxide and the like so that an $\omega$-cyanoalkyl alkxoy silane compound of the general formula

$$NC\text{-}R^3\text{-}CH_2\text{-}CH_2\text{-}Si(CH_3)_{3\text{-}m}(OR^1)_m \quad (IVa)$$

is obtained.

In the next place, the cyanoalkyl alkoxy silane compound of the general formula (IVa) is reacted with hydrogen at a temperature of 20 to 150 °C for 1 to 20 hours in the presence of a catalyst which can be a compound containing copper, nickel or cobalt so that the compound expressed by the general formula (I) or, in particular, the general formula (Ia )is obtained.

It is optional according to need in each step of the above described synthetic procedure that the reaction mixture is diluted with an organic solvent which is exemplified by aromatic hydrocarbon solvents such as benzene, toluene and xylene, alcohols such as methyl and ethyl alcohols, amide compounds such as dimethyl formamide, ethers such as diethyl ether, dioxane and tetrahydrofuran and ketones such as acetone, methyl ethyl ketone, diethyl ketone and methyl isobutyl ketone.

Alternatively, an $\omega$-aminoalkene-1 compound of the general formula

$$NH_2-R^4-CH=CH_2, \qquad (V)$$

in which $R^4$ is a divalent aliphatic hydrocarbon group free from unsaturation having 4 to 12 carbon atoms, and a hydrosilane compound of the general formula

$$HSi(CH_3)_{3-m}(OR^1)_m, \qquad (VI)$$

in which $R^1$ and m each have the same meaning as defined above, are subjected to the hydrosilation reaction at a temperature of 20 to 200 °C for 30 minutes to 40 hours in the presence of a catalyst which can be the same as in the hydrosilation reaction of the first synthetic route. The reaction mixture in this case also can be diluted, if necessary, with an organic solvent which is selected from those given as the examples of the solvent in the first synthetic route.

Further alternatively, the aminoalkyl alkoxy silane compound of the general formula (I) can be prepared by the reaction of an $\omega$-halogenoalkyl alkoxy silane compound of the general formula

$$Z-R^2-Si(OR^1)_m(CH_3)_{3-m}, \qquad (VII)$$

in which Z is an atom of halogen and $R^1$, $R^2$ and m each have the same meaning as defined above, with ammonia or an alkali metal amide such as sodium amide and potassium amide at a temperature of 0 to 200 °C for 1 to 20 hours. This reaction can be accelerated by a catalytic amount of sodium iodide or potassium iodide as a catalyst. Further, it is optional that the reaction mixture is admixed with a hydrogen halide acceptor such as amine compounds, e.g., triethyl amine and urea, and sodium methoxide. When ammonia is used in an excess amount over stoichiometric for the amination reaction, the excess of ammonia also serves as an acid acceptor. The reaction mixture can be diluted with an organic sol-vent, if necessary.

The inventive aminoalkyl alkoxy silane compound of the general formula(I) can be used in a variety of applications including a priming agent in the adhesive bonding of an organic resin with an inorganic material, modifying agent in a composite material consisting of an organic resin and an inorganic material, surface-modifying agent of organic and inorganic materials, initiator for the polymerization reaction in the preparation of certain polymers, intermediate or terminal-blocking agent of various kinds of organosilicon compounds and so on. When used in these applications, the inventive compound can give quite satisfactory results, for example, such as flexibility and toughness of the composite material admixed therewith not obtained with any conventional aminoalkyl alkoxy silane compounds presumably due to the large length of the linking unit between the amino group and the silicon atom to ensure mobility of the amino group or flexibility of the amino alkyl group.

In short, the aminoalkyl alkoxy silane compound of the invention has an effect to improve the compatibility between an inorganic material and an organic or, in particular, polymeric material. The inorganic material applicable here includes glass, silica and siliceous materials, mica, alumina, talc, clay, metals, e.g., aluminum, iron and copper, metallic boron, asbestos, titanium dioxide, zinc oxide, iron oxide, graphite, carbon black, calcium carbonate and the like. The organic polymeric material includes polyolefins, e.g., polyethylene and polypropylene, polystyrene, acrylic resins, polyvinyl chloride, polycarbonate, nylons, melamine resins, phenolic resins, epoxy resins, urethane resins, polyimide resins, polyesters, polysulfides, polyphenylene ether, polyphenylene sulfide, polyacetals and the like. The inventive compound is effective for any combinations of these inorganic and organic materials.

Further, the aminoalkyl alkoxy silane compound of the invention is effective as a modifying agent of various kinds of organic resins, for example, to impart the resin with excellent curability at room temperature, presumably, for the same reason as above. In addition, the long-chain alkylene group between the amino group and the silicon atom having hydrophobicity is contributive to the improvement of the water resistance of the organic resin or a composite material thereof compounded with the compound as well as to the improvement of the storage stability of the room temperature-curable or moisture-curable resin compositions.

In the following, examples are given to illustrate the synthesis and characterization of the inventive aminoalkyl alkoxy silane compounds as well as application thereof.

Example 1.

Into an autoclave of 2-liter capacity equipped with a stirrer and a thermometer were introduced 160g (0.47 mole) of 10-bromodecyl trimethoxy silane. 800 g of methyl alcohol and 180 g (10.59 moles) of ammonia to form a reaction mixture which was heated for 5 hours at a temperature of 100 to 110 °C under a pressure of about 11 kg/cm$^2$G to effect the reaction of amination. Thereafter, the unreacted ammonia was purged out of the reaction mixture which was then admixed with 86.2 g of a 28% methyl alcohol solution of sodium methoxide (0.44 mole of sodium methoxide) which decomposed the dissolved ammonium bromide to form precipitates of sodium bromide followed by filtration to remove the precipitates of sodium bromide. The filtrate was freed from the solvent and volatile matters by stripping at 80 °C under a pressure of 10 mmHg to leave 135.0 g of a clear, light yellow liquid.

The above obtained liquid was subjected to distillation under reduced pressure to give 42.0 g of a clear and colorless liquid fraction boiling at 132 to 136 °C under a pressure of 0.015 Torr. This product was subjected to the infrared absorption spectrophotometric analysis, $^1$H-NMR analysis and elementary analysis to give the results shown below, from which it could be identified to be 10-aminodecyl trimethoxy silane of the formula

$(CH_3O)_3Si-(CH_2)_{10}-NH_2$.

The purity of the above obtained liquid product relative to this compound was 98.6% according to the result of the gas chromatographic analysis so that the yield of the compound was 32.3% of the theoretical value.

Results of elementary analysis

|  | C | H | Si | N |
|---|---|---|---|---|
| Calculated, %, for $C_{13}H_{31}O_3NSi$ | 56.27 | 11.26 | 10.12 | 5.05 |
| Found, % | 56.18 | 11.20 | 10.21 | 5.13 |

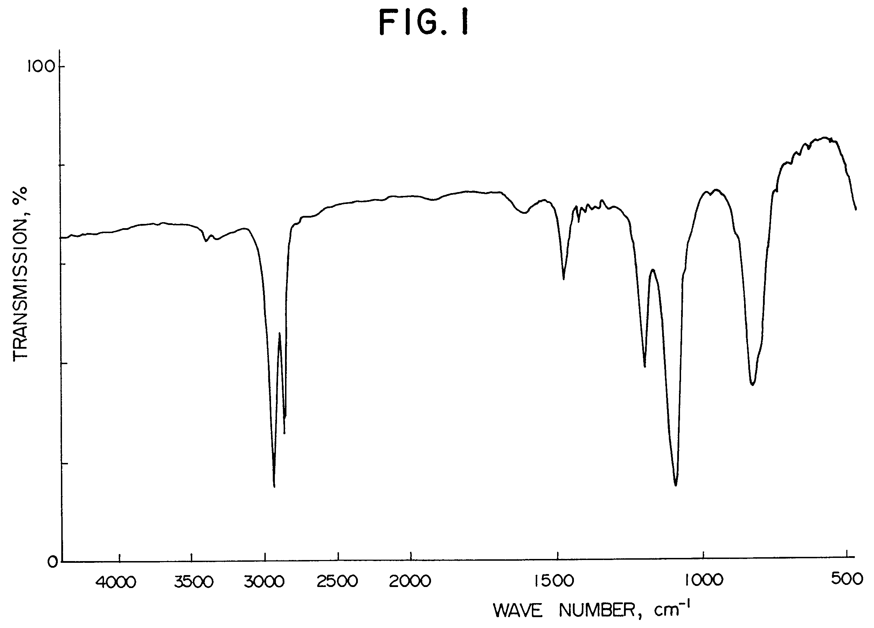

Results of infrared absorption spectrophotometry (see Figure 1)

1089, 1192cm$^{-1}$ : $Si-O-CH_3$
1464, 2854, 2926cm$^{-1}$ : C-H
1597, 3293 cm$^{-1}$ : N-H

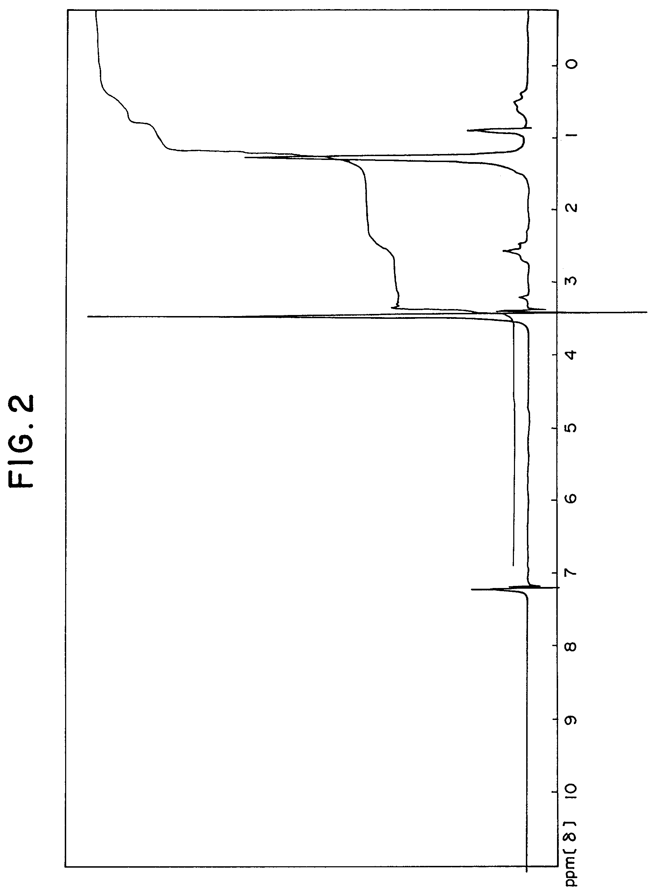

Results of $^1$H-NMR spectrometry (see Figure 2).

$\delta$ = 3.49 ppm (s, 9H) : $Si-O-CH_3$
$\delta$ = 0.27-0.73 ppm (broad-t, 2H) : $Si-\underline{CH_2}-(CH_2)_8-CH_2-NH_2$
$\delta$ = 1.07-1.6 ppm (m, 16H) : $Si-CH_2-\underline{(CH_2)_8}-CH_2-NH_2$
$\delta$ = 2.46-2.77 ppm (broad-t, 2H) : $Si-CH_2-(CH_2)_8-\underline{CH_2}-NH_2$
$\delta$ = 0.93 ppm (s, 2H) : $Si-CH_2-(CH_2)_8-CH_2-\underline{NH_2}$

Example 2.

The reaction procedure was substantially the same as in Example 1 excepting replacement of 160 g of the 10-bromodecyl trimethoxy silane with 148.7 g (0.50 mole) of 6-bromohexyl methyl dimethoxy silane. Distillation of the reaction mixture after completion of the reaction under reduced pressure gave 48.5 g of a clear and colorless liquid fraction boiling at 132 to 136 °C under a pressure of 0.015 Torr. This product was subjected to the infrared absorption spectrophotometric analysis, $^1$H-NMR spectrometric analysis and elementary analysis to give the results shown below, from which it could be identified to be 6-aminohexyl trimethoxy silane of the formula

$(CH_3CH_2O)_2(CH_3)Si-(CH_2)_6-NH_2$.

The purity of the above obtained liquid product relative to this compound was 92.6% according to the result of the gas chromatographic analysis so that the yield of the compound was 41.6% of the theoretical value.

Results of elementary analysis

|  | C | H | Si | N |
|---|---|---|---|---|
| Calculated, %, for $C_{11}H_{27}O_2NSi$ | 56.60 | 11.66 | 12.03 | 6.00 |
| Found, % | 56.49 | 11.58 | 12.18 | 6.09 |

Results of infrared absorption spectrophotometry

| 1256 cm$^{-1}$ | :Si-CH$_3$ |
|---|---|
| 954, 1082, 1109, 1167, 1393 cm$^{-1}$ | :Si-O-CH$_2$CH$_3$ |
| 1465, 2854, 2924, cm$^{-1}$ | :C-H |
| 1597, 3292 cm$^{-1}$ | :N-H |

Results of $^1$H-NMR spectrometry

$\delta$ = 0.00 ppm (s, 3H)  :Si-CH$_3$
$\delta$ = 3.80 ppm (q, 4H)  :Si-O-$\overline{C}$H$_2$-CH$_3$
$\delta$ = 1.10 ppm (t, 6H)  :Si-O-C$\overline{H}_2$-CH$_3$
$\delta$ = 0.26-0.72 ppm (broad-t, 2H)  :Si-CH$_2$-(CH$_2$)$_4$-CH$_2$-NH$_2$
$\delta$ = 1.00-1.80 ppm (m, 8H)  :Si-C$\overline{H}_2$-(CH$_2$)$_4$-CH$_2$-NH$_2$
$\delta$ = 2.40-2.75 ppm (broad-t, 2H)  :Si-CH$_2$-(C$\overline{H}_2$)$_4$-CH$_2$-NH$_2$
$\delta$ = 0.98 ppm (s, 2H)  :Si-CH$_2$-(CH$_2$)$_4$-C$\overline{H}_2$-NH$_2$

Example 3.

The reaction procedure was substantially the same as in Example 1 excepting replacement of 160 g of the 10-bromodecyl trimethoxy silane with 91.25 g (0.25 mole) of 14-bromotetradecyl dimethyl methoxy silane. Concentration of the reaction mixture after completion of the reaction by stripping at 150 °C under a pressure of 5 mmHg gave 61.4 g of a clear, brown liquid. This product was subjected to the infrared absorption spectrophotometric analysis, $^1$H-NMR spectrometric analysis and elementary analysis to give the results shown below, from which it could be identified to be 14-aminotetradecyl dimethyl methoxy silane of the formula

$(CH_3O)(CH_3)_2Si-(CH_2)_{14}-NH_2$.

The purity of the above obtained liquid product relative to this compound was 92.6% according to the result of the gas chromatographic analysis so that the yield of the compound was 81.5% of the theoretical value.

Results of elementary analysis

|  | C | H | Si | N |
|---|---|---|---|---|
| Calculated, %, for $C_{17}H_{39}ONSi$ | 67.70 | 13.03 | 9.31 | 4.64 |
| Found, % | 67.59 | 12.90 | 9.41 | 4.69 |

Results of infrared absorption spectrophotometry

| 1256 cm$^{-1}$ | :Si-CH$_3$ |
| 1089, 1192 cm$^{-1}$ | :Si-O-CH$_3$ |
| 1465, 2854, 2926, cm$^{-1}$ | :C-H |
| 1596, 3290 cm$^{-1}$ | :N-H |

Results of $^1$H-NMR spectrometry

| $\delta$ = 0.00 ppm (s, 6H) | :Si-CH$_3$ |
| $\delta$ = 3.51 ppm (s, 3H) | :Si-O-$\overline{\text{C}}$H$_3$ |
| $\delta$ = 0.22-0.78 ppm (broad-t, 2H) | :Si-$\overline{\text{CH}_2}$-(CH$_2$)$_{12}$-CH$_2$-NH$_2$ |
| $\delta$ = 1.08 ppm (m, 24H) | :Si-C$\overline{\text{H}}_2$-(CH$_2$)$_{12}$-CH$_2$-NH$_2$ |
| $\delta$ = 2.30-2.71 ppm (broad-t, 2H) | :Si-CH$_2$-(C$\overline{\text{H}}_2$)$_4$-CH$_{12}$-NH$_2$ |
| $\delta$ = 1.02 ppm (s, 2H) | :Si-CH$_2$-(CH$_2$)$_{12}$-$\overline{\text{C}}$H$_2$-NH$_2$ |

Application Example.

Four kinds of surface-treated silica powders, referred to as the silica powders A, B, C, and D hereinbelow, were prepared each by blending 500 parts by weight of a fused quartz glass powder having an average particle diameter of about 9 $\mu$m with 475 parts by weight of methyl alcohol, 20 parts by weight of water and 5 parts by weight of one of the aminoalkyl alkoxy silane compounds prepared in Examples 1, 2 and 3 for the silica powders A, B and C, respectively, or the same amount of 3-aminopropyl triethoxy silane for the silica powder D for comparative purpose followed by heating of the wet powder under reduced pressure at 100 °C for 5 hours to give a dry surface-treated silica powder.

In the next place, 300 parts by weight of one of the silica powders A to D were admixed with 36.07 parts by weight of a phenolic resin, 63.93 parts by weight of an epoxy resin, 1.00 part by weight of carnauba wax and 0.70 part by weight of triphenyl phosphine and the blend was thoroughly milled on a two-roller mill to give a resin molding composition. The resin composition was shaped by injection molding at 175 °C to give a test specimen of the cured resin composition having dimensions of 80 mm by 10 mm by 4 mm.

The test specimens either as prepared or after a pressure-cooker test to absorb water at 120 °C under a pressure of 2.1 atmospheres for 50 hours were subjected to the measurement of the flexural strength according to the procedure specified in JIS K 6911 to give the results shown in the table below.

Table

| Silica powder | Flexural strength, kgf/mm$^2$ | |
|---|---|---|
| | As prepared | After water absorption |
| A | 14.5 | 11.5 |
| B | 14.9 | 10.2 |
| C | 14.3 | 10.6 |
| D | 14.2 | 7.2 |

**Claims**

**1.** An aminoalkyl alkoxy silane compound having at least one alkoxy group represented by the general formula

(R$^1$O)m(CH$_3$)$_{3-m}$Si-R$^2$-NH$_2$,

in which R$^1$ is a monovalent aliphatic hydrocarbon group having 1 or 2 carbon atoms, R$^2$ is a divalent aliphatic hydrocarbon group free from unsaturation having 6 to 14 carbon atoms and the subscript m is a positive integer of 1, 2 or 3.

**2.** The aminoalkyl alkoxy silane compound as claimed in claim 1 in which the groups denoted by R$^1$ is a

methyl or ethyl group.

3. The aminoalkyl alkoxy silane compound as claimed in claim 1 which is an $\omega$-amino-n-alkyl alkoxy silane compound represented by the general formula

$NH_2\text{-}(\text{-}CH_2\text{-})_n\text{-}Si(OR^1)_m(CH_3)_{3\text{-}m}$,

in which each symbol has the same meaning as defined above.

4. The aminoalkyl alkoxy silane compound as claimed in claim 3 in which the subscript n is 6.

5. The aminoalkyl alkoxy silane compound as claimed in claim 3 in which the subscript n is 10.

6. The aminoalkyl alkoxy silane compound as claimed in claim 3 in which the subscript n is 14.

7. The aminoalkyl alkoxy silane compound as claimed in claim 1 which is a 1-methyl-$\omega$-amino-n-alkyl alkoxy silane compound represented by the general formula

$NH_2\text{-}(\text{-}CH_2\text{-})_{n\text{-}2}\text{-}CH(CH_3)\text{-}Si(OR)_m(CH_3)_{3\text{-}m}$,

in which each symbol has the same meaning as defined above.

# FIG. I

EP 0 498 458 A2

FIG. 2

EP 0 498 458 A2